# FASCICULE DE BREVET EUROPEEN

(11) **EP 4 313 687 B1**
(45) Date de publication et mention de la délivrance du brevet: **25.12.2024**
(21) Numéro de dépôt: 22707808.6
(22) Date de dépôt: 09.02.2022
(51) Int. Cl.: B60R 11/04

(54) **DISPOSITIF DE MONTAGE D'UNE CAMÉRA DE RECUL SUR LE PARE-CHOCS ARRIÈRE D'UN VÉHICULE AUTOMOBILE**
VORRICHTUNG ZUR MONTAGE EINER RÜCKBLICKKAMERA AN DER HINTEREN STOSSSTANGE EINES KRAFTFAHRZEUGS
DEVICE FOR MOUNTING A REARVIEW CAMERA ON THE REAR BUMPER OF A MOTOR VEHICLE

(30) Priorité: 23.03.2021 FR 2102913
(43) Date de publication de la demande: 07.02.2024
(73) Titulaire: Stellantis Auto SAS, 78300 Poissy (FR)
(72) Inventeur: BOUDAN, Julien, 91210 DRAVEIL (FR)
(74) Mandataire: BCIP
(86) Numéro de dépôt international: PCT/FR2022/050235
(87) Numéro de publication internationale: WO 2022/200697

(56) Documents cités:
- WO-A1-2005/021329
- CN-A- 108 569 221
- FR-A1- 3 021 608

## Description

### [Domaine technique]

La présente invention revendique la priorité de la demande française 2102913 déposée le 23mars 2021.

La présente invention concerne d'une manière générale la problématique du montage d'une caméra de recul sur le pare-chocs arrière d'un véhicule automobile. Elle vise en particulier un dispositif de montage d'une telle caméra de recul sur un tel pare-chocs arrière de véhicule automobile.

[Technique antérieure] FR3021608A1, qui est considéré comme l'état de la technique le plus proche, divulgue un dispositif de montage conformément au préambule de la revendication 1.

Lorsqu'un conducteur effectue une manoeuvre, son champ de vision est réduit par les angles morts du véhicule qui l'empêchent de percevoir son environnement rapproché. Par exemple, il ne peut pas visualiser ce qui est directement derrière son pare-chocs arrière lorsqu'il effectue une manoeuvre en reculant.

Pour aider le conducteur, il est connu de placer au moins une caméra au niveau des angles morts et d'afficher l'image sur un écran placé dans le champ de vision du conducteur.

Une telle caméra est généralement implantée sur le pare-chocs arrière à proximité de la zone d'accueil de la plaque d'immatriculation arrière du véhicule, son axe optique étant orienté vers l'arrière et vers le bas, de manière à pouvoir détecter les obstacles de faible hauteur situés à l'arrière du véhicule et que le conducteur ne peut pas voir.

L'implantation de la caméra s'effectue par l'intermédiaire d'un dispositif de montage qui assure d'une part la fixation de la caméra au pare-chocs arrière et d'autre part la protection du corps de cette caméra des agressions extérieures.

Un tel dispositif de montage comporte classiquement :
- un boîtier ouvert par l'une de ses faces définissant une cavité de réception apte à loger au moins une partie de la caméra et étant pourvu d'un orifice destiné à se trouver en vis-à-vis de l'objectif de cette caméra afin de permettre à cette dernière de capturer au travers de cet orifice l'environnement arrière dudit véhicule, ledit boîtier comprenant des moyens de clipsage aptes à permettre de le rapporter fixement par encliquetage via sa face ouverte contre la face extérieure du pourtour d'une ouverture ménagée dans le pare-chocs arrière ; et
- un support comprenant des trous de fixation aptes à permettre de le rapporter fixement par vissage contre la face intérieure du pourtour de ladite ouverture et en vis-à-vis de ladite face ouverte dudit boîtier de sorte à assurer le verrouillage en position de ladite caméra prise en sandwich entre ledit boîtier et ledit support.

Ce type de dispositif de montage permet d'assurer un montage précis et efficace de la caméra mais l'utilisation de vis de fixation a pour inconvénient d'entrainer un surcoût non négligeable ainsi qu'une augmentation du temps de montage de la caméra.

On connaît également du document CN 108569221 A, un dispositif de montage pour caméra de pare-chocs arrière comprenant :
- un boîtier ouvert par l'une de ses faces, définissant une cavité de réception apte à loger au moins une partie de la caméra, et étant pourvu d'un orifice destiné à se trouver en vis-à-vis de l'objectif de cette caméra afin de permettre à cette dernière de capturer au travers de cet orifice l'environnement arrière dudit véhicule, ledit boîtier comprenant deux pattes de clipsage saillant symétriquement à l'avant de la cavité et aptes à coopérer par encliquetage avec les bords latéraux d'une ouverture ménagée dans le pare-chocs arrière, ainsi que deux colonnettes à section en U saillant symétriquement à l'avant de la cavité et dont les branches sont orientées du côté interne ; et
- un panneau support apte à venir se monter de manière amovible sur le boîtier pour verrouiller en position la caméra, ce panneau support comportant un arbre apte à venir s'emboîter dans une encoche de réception ménagée à proximité de l'extrémité avant libre de l'une des colonnettes de sorte à ce que ce panneau puisse pivoter par rapport à ce boîtier, ce panneau support comportant également une languette de clipsage apte à pénétrer lors du pivotement du panneau en direction de la cavité dans la partie supérieure de la seconde colonnette et à venir s'encliqueter sur une dent ménagée dans cette colonnette de sorte à assurer la fixation du panneau sur le boîtier et la retenue de la caméra.

Bien qu'un tel dispositif de montage assure un montage rapide et sans vis de la caméra sur le pare-chocs arrière d'un véhicule, il s'avère à l'usage que le panneau support uniquement clipsé sur le boîtier a tendance à de désolidariser de ce boîtier du fait des vibrations auxquelles le véhicule est soumis lors des phases de roulage, ce qui entraine un déplacement de la caméra voire son retrait du boîtier.

### [Exposé de l'invention]

La présente invention vise donc à améliorer la situation.

Elle propose à cet effet un dispositif de montage d'une caméra de recul sur le pare-chocs arrière d'un véhicule automobile, comportant :
- un boîtier ouvert par l'une de ses faces, définissant une cavité de réception apte à loger au moins une partie de ladite caméra, et étant pourvu d'un orifice destiné à se trouver en vis-à-vis de l'objectif de cette caméra afin de permettre à cette dernière de capturer au travers de cet orifice l'environnement arrière dudit véhicule, ledit boîtier comprenant des moyens de clipsage aptes à permettre de le rapporter fixement par encliquetage via sa face ouverte contre la face extérieure du pourtour d'une ouverture ménagée dans ledit pare-chocs arrière, et
- un support comprenant des moyens de fixation aptes à permettre de le rapporter fixement contre la face intérieure dudit pourtour de ladite ouverture et en vis-à-vis de ladite face ouverte dudit boîtier de sorte à assurer le verrouillage en position de ladite caméra prise en sandwich entre ledit boîtier et ledit support ; caractérisé en ce que lesdits moyens de fixation dudit support comportent au moins un bec prévu pour coopérer par empiochage avec une lumière de forme correspondante ménagée dans ledit pare-chocs, ainsi qu'au moins une languette de clipsage apte à coopérer par encliquetage avec un bord de ladite ouverture.

Le dispositif de montage selon l'invention permet d'assurer un montage rapide et sans vis d'une caméra de recul sur le pare-chocs arrière d'un véhicule automobile, tout en offrant une grande sureté de fixation de cette caméra prise en sandwich entre le boîtier et le support.

Selon des caractéristiques préférées dudit dispositif de montage selon l'invention :
- lesdits moyens de fixation comportent deux dits becs saillant longitudinalement vers l'arrière depuis les extrémités latérales supérieures dudit support et prévus pour coopérer par empiochage avec deux dites lumières de forme correspondante ménagées dans ledit pare-chocs ;
- lesdits moyens de fixation comportent deux dites languettes de clipsage orientées longitudinalement et ménagées en partie basse dudit support en étant écartées transversalement l'une de l'autre ;
- lesdits moyens de fixation comportent au moins une fenêtre rectangulaire ménagée dans ledit support et prévue pour être traversée selon un axe longitudinal par un crochet correspondant agencé sur ledit boîtier ;
- lesdits moyens de fixation comportent deux dites fenêtres rectangulaires ménagées dans ledit support à l'écart transversalement l'une de l'autre ;
- ledit support comporte un muret de retenue saillant depuis l'une de ses parois et prévu pour venir reposer en appui contre la face avant de ladite caméra ;
- ledit support comporte un orifice de fixation « quart de tour » pour un gicleur de liquide de nettoyage destiné à assurer le lavage de l'objectif de ladite caméra ;
- ledit orifice de fixation « quart de tour » présente une portion principale circulaire ainsi que deux encoches ménagées en périphérie de cette portion principale et diamétralement opposées l'une de l'autre ; et/ou
- ledit boîtier est pourvu d'une pluralité de nervures internes de calage destinées à assurer un positionnement sans jeu de ladite caméra dans ladite cavité.

L'invention vise également sous un second aspect, un véhicule automobile comportant un pare-chocs arrière sur lequel est montée une caméra de recul par l'intermédiaire d'un tel dispositif de montage.

### [Brève description des dessins]

L'exposé de l'invention sera maintenant poursuivi par la description détaillée d'un exemple de réalisation, donnée ci-après à titre illustratif mais non limitatif, en référence aux dessins annexés, sur lesquels :
[Fig 1] représente une vue partielle en perspective de la face extérieure du pare-chocs arrière d'un véhicule automobile sur lequel est monté une caméra d'aide au recul par l'intermédiaire d'un dispositif de montage selon l'invention ;
[Fig 2] est une vue en coupe prise selon un plan transversal vertical du boîtier du dispositif de montage logeant la caméra après sa mise en place sur le pare-chocs arrière de la figure 1 ;
[Fig 3] représente une vue partielle en perspective de la face avant du pare-chocs arrière de la figure 1 après le montage de la caméra par l'intermédiaire du dispositif de montage selon l'invention ;
[Fig 4] est une vue en perspective illustrant l'opération de mise en place du support contre la face intérieure du pare-chocs arrière de la figure 1 et le boîtier monté au préalable ;
[Fig 5] est une vue partielle en perspective de la face avant du pare-chocs arrière après le montage de la caméra par l'intermédiaire du dispositif de montage selon l'invention ; et
[Fig 6] est une vue de coupe en perspective du pare-choc arrière de la figure 1 prise selon le plan longitudinal vertical VI-VI de la figure 2 après le montage de la caméra par l'intermédiaire du dispositif de montage selon l'invention.

### [Description détaillée]

On définit par rapport au véhicule un repère orthogonal XYZ comprenant trois axes perpendiculaires deux à deux, à savoir :
- un axe X, définissant une direction longitudinale, horizontale, confondue avec la direction générale de déplacement du véhicule ;
- un axe Y, définissant une direction transversale, horizontale, qui avec l'axe X définit un plan XY horizontal, et
- un axe Z, définissant une direction verticale, perpendiculaire au plan XY horizontal.

Dans la description qui va suivre et par convention, les termes « avant » et « arrière » seront utilisés pour définir la position relative d'un élément par rapport à un autre selon la direction générale de déplacement du véhicule.

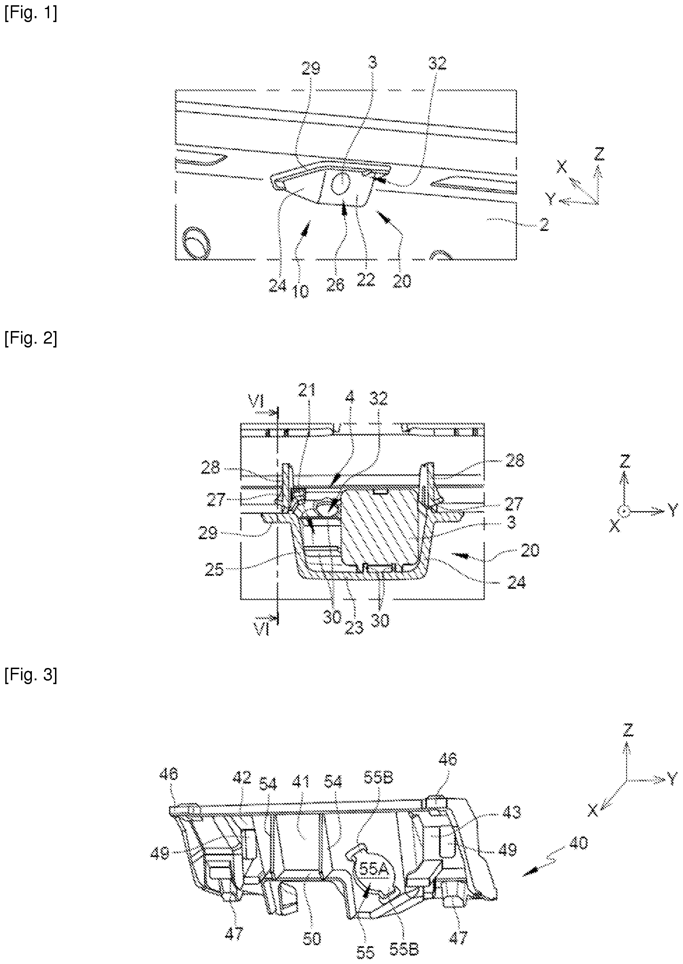

La figure 1 montre la partie centrale de la face extérieure d'un pare-chocs arrière 2 de véhicule automobile sur laquelle est implantée une caméra de vision arrière 3 (mieux visible sur la figure 2) faisant partie d'un dispositif d'aide au parking du véhicule.

L'implantation de la caméra de vision arrière 3 sur le pare-chocs arrière 2 est effectuée par l'intermédiaire d'un dispositif de montage 10 selon l'invention qui assure d'une part la fixation de cette caméra au pare-chocs 2 et d'autre part la protection du corps de cette caméra 3 des agressions extérieures.

Le dispositif de montage 10 comporte un boîtier creux 20 ouvert par l'une de ses faces et prévu pour être rapporté fixement par sa face ouverte contre la face extérieure du pourtour périphérique d'une ouverture 4 ménagée dans le pare-chocs arrière 2 du véhicule.

Le boîtier 20 définit une cavité de réception 21 de section triangulaire destinée à loger au moins une partie de la caméra 3 (voir figure 2), cette cavité 21 étant délimitée par une paroi arrière 22, une paroi inférieure 23, et deux parois latérales 24 et 25.

La paroi arrière 22 présente un premier orifice circulaire 26 destiné à se trouver en vis-à-vis de l'objectif de la caméra 3 afin de permettre à cette dernière de capturer au travers de cet orifice 26 l'environnement arrière du véhicule.

Le boîtier 20 comprend également des moyens d'attache aptes à permettre de le rapporter fixement par sa face ouverte contre la face extérieure du pourtour de l'ouverture 4.

Ces moyens d'attache comportent deux pattes élastiques de clipsage 27 s'étendant depuis deux arceaux latéraux 28 saillant au dessus et dans le prolongement des deux parois latérales 24, 25, et étant prévues pour coopérer par encliquetage avec les bords latéraux de l'ouverture 4 de sorte à assurer la fixation de ce boîtier 20 sur le pare-chocs arrière 2.

Venu avantageusement de moulage d'une seule pièce à partir d'un polymère thermoplastique tel que le polypropylène, le polyamide ou l'Acrylonitrile Butadiène Styrène (ces matériaux présentant les avantages d'être à la fois légers et relativement élastiques), ce boîtier 20 comporte en outre un rebord périphérique externe 29 bordant le bord supérieur des parois 22, 23, 24, 25 et prévu pour reposer fixement contre la face extérieure du pourtour périphérique de l'ouverture 4.

Comme cela est bien visible sur la figure 2, le boîtier 20 est en outre pourvu d'une pluralité de nervures internes de calage 30 destinées à assurer un positionnement sans jeu de la caméra 3 dans la cavité 21.

Ces nervures 30 dont la profondeur peut être ajustée facilement par retrait ou ajout de matière dans le moule d'injection servant à fabriquer le boîtier 20, permettent ainsi de régler précisément l'orientation de l'axe de la caméra 3 vis-à-vis du véhicule.

Le dispositif de montage 10 comporte également un support 40 destiné à être rapporté fixement, après la mise en place du boîtier 20 sur le pare-chocs 2 et le positionnement de la caméra 3 dans ce boîtier 20, selon un axe de montage longitudinal contre la face intérieure du pare-chocs arrière 2 du véhicule, au niveau de l'ouverture 4, de sorte à assurer le verrouillage en position de la caméra 3 prise en sandwich entre le boîtier 20 et ce support 40.

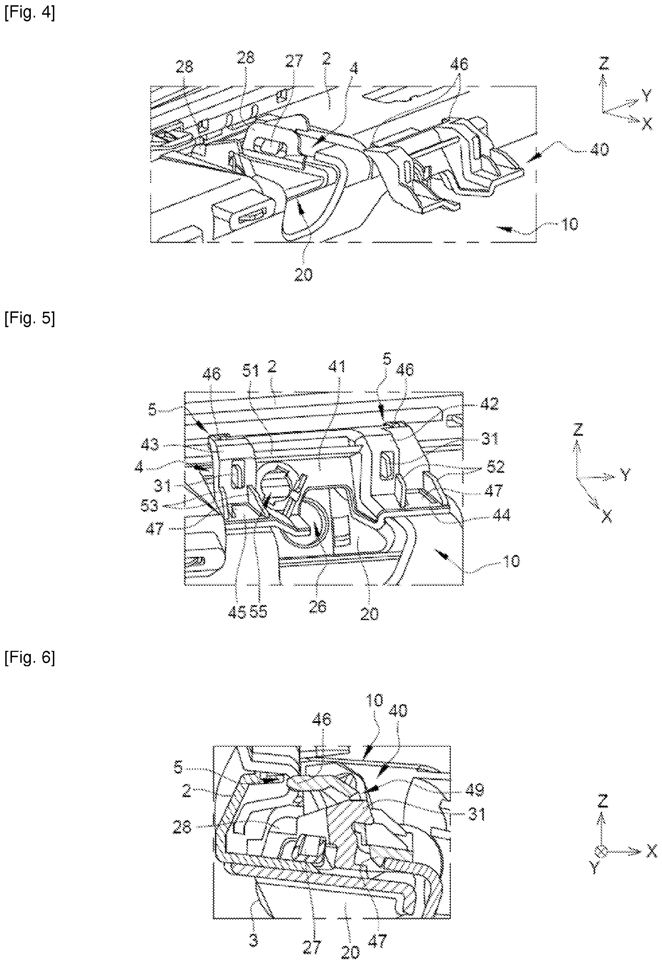

En référence aux figures 3 et 4, le support 40 comporte une paroi centrale plane 41 bordée latéralement par deux pilastres creux latéraux 42, 43 saillant à l'avant de cette paroi centrale 41 et se prolongeant chacun à leur extrémité inférieure par un pied correspondant 44, 45 s'étendant sensiblement horizontalement vers l'avant, ces deux pieds 44, 45 étant prévus pour venir reposer, après la mise en place de ce support 40, en appui contre les portions latérales de la face intérieure du pourtour périphérique de l'ouverture 4.

Venu avantageusement de moulage d'une seule pièce à partir d'un polymère thermoplastique tel que le polypropylène, le polyamide ou l'Acrylonitrile Butadiène Styrène (ces matériaux présentant les avantages d'être à la fois légers et relativement élastiques), ce support 40 comporte par ailleurs des moyens de fixation aptes à coopérer avec des moyens complémentaires prévus sur le pare-chocs 2 et sur le boîtier 20 pour l'arrimer rigidement à ce pare-chocs 2.

Tel qu'illustré sur la figure 3, ces moyens de fixation comportent deux becs 46 saillant longitudinalement vers l'arrière depuis les extrémités latérales supérieures du support 40 (plus précisément depuis les sommets des deux pilastres latéraux 42, 43) et destinés, lors de la mise en place de ce support 40, à coopérer par empiochage avec deux lumières rectangulaires de forme correspondante 5 ménagées dans le pare-chocs arrière 2 à proximité de l'ouverture 4, de sorte à assurer le verrouillage du support 40 vis-à-vis de ce pare-chocs 2 selon les directions transversale et verticale (voir figure 6).

En référence aux figures 3 et 5, les moyens de fixation du support 40 comportent également deux languettes longitudinales de clipsage 47 ménagées en partie basse de ce support 40 en étant écartées transversalement l'une de l'autre (ces languettes 47 étant en l'espèce découpées chacune dans un pied d'appui correspondant 44, 45) et aptes à coopérer par encliquetage avec le bord arrière de l'ouverture 4 de sorte à assurer le verrouillage longitudinal du support 40 vis-à-vis du pare-chocs 2 (voir figure 6).

Tel qu'illustré sur les figures 3 à 6, les moyens de fixation du support 40 comprennent également de manière avantageuse deux fenêtres rectangulaires 49 ménagées chacune dans un pilastre latéral correspondant 42, 43 de sorte à être écartées transversalement l'une de l'autre.

Tel qu'illustré sur les figures 5 et 6, ces deux fenêtres 42, 43 sont prévues pour être traversées selon des axes longitudinaux, lors de la mise en place de ce support 40 sur le pare-chocs arrière 2, par deux crochets 31 correspondants s'étendant longitudinalement vers l'avant depuis les deux arceaux latéraux 28 du boîtier 20, de sorte à empêcher tout soulèvement à pivotement autour d'un axe transversal du support 40 qui pourrait entrainer le déclipsage des languettes 47 (ce mouvement de rotation étant en effet bloqué par la coopération en butée des bords inférieurs de ces fenêtres 49 contre les extrémités inférieures de ces crochets 31).

Comme cela est bien visible sur la figure 3, le support 40 comporte en outre un muret de retenue 50 à section en U saillant depuis la face arrière (celle destinée à se trouver en regard de la caméra 3) de la paroi centrale 41 et prévu pour venir reposer en appui contre la face avant de cette caméra 3 de sorte à la verrouiller en position après la mise en place de ce support 20 (celle-ci étant prise en sandwich entre la paroi arrière 22 du boîtier 20 et le sommet du muret 50).

Le support 40 comprend par ailleurs plusieurs nervures de rigidification permettant de renforcer sa résistance mécanique, à savoir notamment :
- une nervure 51 saillant de la face avant de la paroi centrale 41 et s'étendant transversalement entre les deux pilastres latéraux 42, 43 (voir figure 5) ;
- deux nervures 52 saillant sensiblement verticalement de la face supérieure du pied 44 de part et d'autre d'une languette de clipsage 27 et étant adossées au pilastre latéral 42 ;
- deux nervures 53 saillant sensiblement verticalement de la face supérieure du pied 45 de part et d'autre d'une languette de clipsage 27 et étant adossées au pilastre latéral 43 (voir figure 5) ; et
- deux nervures 54 saillant de la face arrière de la paroi centrale 41 et étant adossées du muret de retenue 50 (voir figure 3).

Tel qu'illustré sur la figure 3, la paroi centrale 41 du support 40 est pourvue d'un orifice de fixation « quart de tour » permettant le montage, au travers de cette paroi 41, d'un gicleur de liquide de nettoyage (non représenté sur les figures) destiné à assurer le lavage de l'objectif de la caméra exposée aux intempéries, aux projections (boue, poussières, sable, terre, etc...), ou encore à des phénomènes de condensation pouvant dégrader fortement la qualité des images formées à travers ou par cet objectif, au préjudice du confort et de la sécurité du conducteur.

Cet orifice de fixation « quart de tour » 55 présente une portion principale circulaire 55A ainsi que deux encoches 55B ménagées en périphérie de cette portion principale 55A et diamétralement opposées l'une de l'autre.

On remarquera enfin à l'appui de la figure 2 que la paroi arrière 22 du boîtier 20 est pourvue d'un trou circulaire 32 afin de permettre à la tête du gicleur de traverser ce boîtier 20.

Selon des variantes de réalisation non représentées, le boîtier et/ou le support sont est conformés autrement.

Le nombre, la forme et/ou l'agencement des becs d'empiochage et/ou des languettes d'encliquetage prévus sur le support peuvent ainsi être différents.

Le boîtier et support peuvent également être dépourvus de crochets tels que 31 et de fenêtres complémentaires telles que 49 permettant de bloquer le pivotement du support, et/ou leur nombre peut être également différent.

## Revendications

1. Dispositif de montage (10) d'une caméra de recul (3) sur le pare-chocs arrière (2) d'un véhicule automobile, comportant :
- un boîtier (20) ouvert par l'une de ses faces, définissant une cavité de réception (21) apte à loger au moins une partie de ladite caméra (3), et étant pourvu d'un orifice (26) destiné à se trouver en vis-à-vis de l'objectif de cette caméra (3) afin de permettre à cette dernière de capturer au travers de cet orifice (26) l'environnement arrière dudit véhicule, ledit boîtier (20) comprenant des moyens de clipsage (27) aptes à permettre de le rapporter fixement par encliquetage via sa face ouverte contre la face extérieure du pourtour d'une ouverture (4) ménagée dans ledit pare-chocs arrière (2), et
- un support (40) comprenant des moyens de fixation (46, 47, 49) aptes à permettre de le rapporter fixement contre la face intérieure dudit pourtour de ladite ouverture (4) et en vis-à-vis de ladite face ouverte dudit boîtier (20) de sorte à assurer le verrouillage en position de ladite caméra (3) prise en sandwich entre ledit boîtier (20) et ledit support (40) ;
**caractérisé en ce que** lesdits moyens de fixation dudit support comportent au moins un bec (46) prévu pour coopérer par empiochage avec une lumière de forme correspondante (5) ménagée dans ledit pare-chocs (2), ainsi qu'au moins une languette de clipsage (47) apte à coopérer par encliquetage avec un bord de ladite ouverture (4).

2. Dispositif de montage (10) selon la revendication 1, **caractérisé en ce que** lesdits moyens de fixation comportent deux dits becs (46) saillant longitudinalement vers l'arrière depuis les extrémités latérales supérieures dudit support (40) et prévus pour coopérer par empiochage avec deux dites lumières de forme correspondante (5) ménagées dans ledit pare-chocs (2).

3. Dispositif de montage (10) selon l'une des revendications 1 ou 2, **caractérisé en ce que** lesdits moyens de fixation comportent deux dites languettes de clipsage (47) orientées longitudinalement et ménagées en partie basse dudit support (40) en étant écartées transversalement l'une de l'autre.

4. Dispositif de montage (10) selon l'une des revendications 1 à 3, **caractérisé en ce que** lesdits moyens de fixation comportent au moins une fenêtre rectangulaire (49) ménagée dans ledit support (40) et prévue pour être traversée selon un axe longitudinal par un crochet correspondant (31) agencé sur ledit boîtier (20).

5. Dispositif de montage (10) selon la revendication 4, **caractérisé en ce que** lesdits moyens de fixation comportent deux dites fenêtres rectangulaires (49) ménagées dans ledit support (40) à l'écart transversalement l'une de l'autre.

6. Dispositif de montage (10) selon l'une des revendications 1 à 5, **caractérisé en ce que** ledit support (40) comporte un muret de retenue (50) saillant depuis l'une de ses parois et prévu pour venir reposer en appui contre la face avant de ladite caméra (3).

7. Dispositif de montage (10) selon l'une des revendications 1 à 6, **caractérisé en ce que** ledit support (40) comporte un orifice de fixation « quart de tour » (55) pour un gicleur de liquide de nettoyage destiné à assurer le lavage de l'objectif de ladite caméra (3).

8. Dispositif de montage (10) selon la revendication 7, **caractérisé en ce que** ledit orifice de fixation « quart de tour » (55) présente une portion principale circulaire (55A) ainsi que deux encoches (55B) ménagées en périphérie de cette portion principale (55A) et diamétralement opposées l'une de l'autre.

9. Dispositif de montage (10) selon l'une des revendications 1 à 8, **caractérisé en ce que** ledit boîtier (20) est pourvu d'une pluralité de nervures internes de calage (30) destinées à assurer un positionnement sans jeu de ladite caméra (3) dans ladite cavité (21).

10. Véhicule automobile comportant un pare-chocs arrière (2) sur lequel est montée une caméra de recul (3) par l'intermédiaire d'un dispositif de montage (10) selon l'une des revendications 1 à 9.

## Patentansprüche

1. Vorrichtung (10) zur Anbringung einer Rückfahrkamera (3) an der hinteren Stoßstange (2) eines Kraftfahrzeugs, bestehend aus:
- ein Gehäuse (20), das mit einer seiner Seiten offen ist und einen Aufnahmehohlraum (21) definiert, der geeignet ist, mindestens einen Teil der Kamera (3) aufzunehmen, und das mit einer Öffnung (26) versehen ist, die dazu bestimmt ist, dem Objektiv der Kamera (3) gegenüberzuliegen, um es dieser zu ermöglichen, durch diese Öffnung (26) die hintere Umgebung des Fahrzeugs einzufangen, wobei das Gehäuse (20) Einrastmittel (27) aufweist, die geeignet sind, es zu ermöglichen, es durch Einrasten über seine offene Seite fest an die äußere Seite des Umfangs einer Öffnung anzubringen (4) im hinteren Stoßfänger (2) und
- eine Halterung (40) mit Befestigungsmitteln (46, 47, 49), die geeignet sind, sie fest gegen die Innenfläche des Umfangs der Öffnung (4) und gegenüber der offenen Fläche des Gehäuses (20) anzubringen, sodass die Kamera (3), die zwischen dem Gehäuse (20) und der Halterung (40) eingeschlossen ist, in ihrer Position verriegelt wird;
**dadurch gekennzeichnet, dass** die Mittel zur Befestigung des Trägers mindestens eine Nase (46) umfassen, die vorgesehen ist, um durch Einstecken mit einem entsprechend geformten Lumen (5)
zusammenzuwirken, das in der Stoßstange (2) vorgesehen ist, sowie mindestens eine Einrastzunge (47), die geeignet ist, durch Einrasten mit einem Rand der Öffnung (4) zusammenzuwirken.

2. Montagevorrichtung (10) nach Anspruch 1, **dadurch gekennzeichnet, dass** die Befestigungsmittel zwei Nasen (46) umfassen, die in Längsrichtung nach hinten von den oberen seitlichen Enden des Trägers (40) vorstehen und so ausgebildet sind, dass sie durch Einstecken mit zwei entsprechend geformten Öffnungen (5) in der Stoßstange (2) zusammenwirken.

3. Montagevorrichtung (10) nach einem der Ansprüche 1 oder 2, **dadurch gekennzeichnet, dass** die Befestigungsmittel zwei in Längsrichtung ausgerichtete und im unteren Teil des Trägers (40) in Querrichtung voneinander beabstandeter Weise ausgebildete Klipszungen (47) umfassen.

4. Montagevorrichtung (10) nach einem der Ansprüche 1 bis 3, **dadurch gekennzeichnet, dass** die Befestigungsmittel mindestens ein rechteckiges Fenster (49) umfassen, das in dem Träger (40) ausgebildet ist und dazu vorgesehen ist, entlang einer Längsachse von einem entsprechenden Haken (31), der auf dem Gehäuse (20) angeordnet ist, durchquert zu werden.

5. Montagevorrichtung (10) nach Anspruch 4, **dadurch gekennzeichnet, dass** die Befestigungsmittel zwei rechteckige Fenster (49) umfassen, die in dem Träger (40) in Querrichtung voneinander beabstandet ausgebildet sind.

6. Montagevorrichtung (10) nach einem der Ansprüche 1 bis 5, **dadurch gekennzeichnet, dass** der Träger (40) eine Rückhaltewand (50) aufweist, die von einer seiner Wände vorsteht und vorgesehen ist, um in Anlage an der Vorderseite der Kamera (3) zu kommen.

7. Montagevorrichtung (10) nach einem der Ansprüche 1 bis 6, **dadurch gekennzeichnet, dass** die Halterung (40) eine Vierteldrehungsbefestigungsöffnung (55) für eine Reinigungsflüssigkeitsdüse aufweist, die dazu bestimmt ist, das Waschen des Objektivs der Kamera (3) zu gewährleisten.

8. Montagevorrichtung (10) nach Anspruch 7, **dadurch gekennzeichnet, dass** die Vierteldrehungs-Befestigungsöffnung (55) einen kreisförmigen Hauptabschnitt (55A) sowie zwei Kerben (55B) aufweist, die am Umfang dieses Hauptabschnitts (55A) ausgebildet und einander diametral gegenüberliegend angeordnet sind.

9. Montagevorrichtung (10) nach einem der Ansprüche 1 bis 8, **dadurch gekennzeichnet, dass** das Gehäuse (20) mit einer Vielzahl von inneren Keilrippen (30) versehen ist, um eine spielfreie Positionierung der Kamera (3) in dem Hohlraum (21) zu gewährleisten.

10. Kraftfahrzeug mit einem hinteren Stoßfänger (2), auf dem eine Rückfahrkamera (3) über eine Montagevorrichtung (10) nach einem der Ansprüche 1 bis 9 montiert ist.

## Claims

1. Mounting device (10) of a rear view camera (3) on the rear bumper (2) of a motor vehicle, comprising:
housing (20) opened by one of its faces, defining a receiving cavity (21) capable of housing at least a part of said camera (3), and being provided with an orifice (26) intended to be opposite the objective of this camera (3) in order to allow the latter to capture through this orifice (26) the rear environment of said vehicle, said housing (20) comprising clipping means (27) capable of allowing it to be attached fixedly by snap-fastening via its open face against the external face of the periphery of an opening (4) provided in said rear bumper (2), and
support (40) comprising fixing means (46, 47, 49) capable of enabling it to be fixed against the inner face of said periphery of said opening (4) and opposite said open face of said housing (20) so as to ensure the locking in position of said camera (3) sandwiched between said housing (20) and said support (40);
**characterized in that** said means for fixing said support comprise at least one beak (46) designed to cooperate by stacking with a slot of corresponding shape (5) made in said bumper (2), and at least one snap-fastening tongue (47) able to cooperate by snap-fastening with an edge of said opening (4).

2. Mounting device (10) according to claim 1, **characterized in that** the said fixing means comprise two said spouts (46) projecting longitudinally rearwards from the upper lateral ends of the said support (40) and designed to cooperate by stacking with two said openings of corresponding shape (5) formed in the said bumper (2).

3. Mounting device (10) according to either of claims 1 and 2, **characterized in that** the said fixing means comprise two said snap-fastening tongues (47) oriented longitudinally and formed in the lower part of the said support (40) while being spaced transversely from one another.

4. Mounting device (10) according to one of claims 1 to 3, **characterized in that** the said fixing means comprise at least one rectangular window (49) formed in the said support (40) and designed to be traversed along a longitudinal axis by a corresponding hook (31) arranged on the said housing (20).

5. Mounting device (10) according to claim 4, **characterized in that** the said fixing means comprise two said rectangular windows (49) formed in the said support (40) at a transverse distance from one another.

6. Mounting device (10) according to one of claims 1 to 5, **characterized in that** the said support (40) comprises a retaining wall (50) projecting from one of its walls and provided to come to rest against the front face of the said camera (3).

7. Mounting device (10) according to one of claims 1 to 6, **characterized in that** the said support (40) comprises a "quarter-turn" fixing orifice (55) for a spray nozzle for cleaning liquid intended to ensure the washing of the lens of the said camera (3).

8. Mounting device (10) according to claim 7, **characterized in that** the said quarter-turn fixing orifice (55) has a circular main portion (55A) and two notches (55B) formed at the periphery of this main portion (55A) and diametrically opposite one another.

9. Mounting device (10) according to one of claims 1 to 8, **characterized in that** the said housing (20) is provided with a plurality of internal wedging ribs (30) intended to ensure a positioning without play of the said camera (3) in the said cavity (21).

10. Motor vehicle comprising a rear bumper (2) on which a rear view camera (3) is mounted by means of a mounting device (10) according to one of claims 1 to 9.
